# EUROPEAN PATENT SPECIFICATION

(11) **EP 0 597 773 B1**
(45) Date of publication and mention of the grant of the patent: **22.04.1998**
(21) Application number: 93402745.9
(22) Date of filing: 09.11.1993
(51) Int. Cl.: A47J 41/02, B23K 1/00

(54) **Method for producing a metallic evacuated double-walled vessel**
Verfahren zum Herstellen eines Metallbehälters mit evakuierter Doppelwand
Procédé de fabrication d'un récipient métallique à double parois évacuée

(30) Priority: 12.11.1992 JP 302621/92; 07.12.1992 JP 327048/92
(43) Date of publication of application: 18.05.1994
(60) Divisional application: 96202986.4
(73) Proprietor: NIPPON SANSO CORPORATION, Minato-ku, Tokyo (JP)
(72) Inventor: Ishii, Hiroshi, c/o Nippon Sanso Corporation, Tokyo (JP); Satomi, Yasuhiko, c/o Nippon Sanso Corporation, Tokyo (JP); Itoh, Seiichi, c/o Nippon Sanso Corporation, Tokyo (JP); Otsuka, Eiji, c/o Nippon Sanso Corporation, Tokyo (JP); Yamaki, Jun, c/o Nippon Sanso Corporation, Tokyo (JP); Ochiai, Toshimitsu, c/o Nippon Sanso Corporation, Tokyo (JP)
(74) Representative: Ilgart, Jean-Christophe

(56) References cited:
- EP-A- 0 497 064
- US-A- 3 953 757
- US-A- 4 251 252
- US-A- 5 153 977
- PATENT ABSTRACTS OF JAPAN vol. 011, no. 073 (E-486)5 March 1987 & JP-A-61 228 688 (NEC CORP.) 11 October 1986
- PATENT ABSTRACTS OF JAPAN vol. 016, no. 076 (C-0914)25 February 1992 & JP-A-03 267 023 (NIPPON SANSO KK) 27 November 1991
- PATENT ABSTRACTS OF JAPAN vol. 014, no. 522 (C-0778)15 November 1990 & JP-A-02 215 416 (NIPPON SANSO KK) 28 August 1990

## Description

### BACKGROUND OF THE INVENTION

The present invention relates to a metallic double-walled vessel such as a portable thermos, pot, jar or the like.

As a method for producing a metallic evacuated double-walled vessel, there are available such conventional methods as, for example, a method wherein the evacuation of the space between an inner and an outer vessel is carried out by means of a chip tube attached to the outer vessel, and the chip tube is then pressure welded and sealed (Japanese Patent Application, laid open number Sho 59-37914, Japanese Patent Application laid open number Sho 59-103633); a method wherein an evacuation opening is provided to the outer vessel, a brazing metal material is piled around the periphery of the evacuation hole, a sealing member is placed on top of this with an interval of space being maintained between the sealing member and the evacuation hole, heat evacuation is carried out in a vacuum heating furnace, after which, the temperature is raised to the melting temperature of the brazing metal material, the sealing member is brazed, and the vessel is thus vacuum sealed (Japanese Patent Application laid open number Sho 58-192516); and a method wherein a small hole or cut-out is punched in the outer vessel, a brasing metal material is disposed in the vicinity thereof, heat evacuation in a vacuum heating furnace is then performed, the temperature is raised to the melting temperature of the brazing metal material causing the it to melt and flow into the small hole or cut-out, thus vacuum sealing the vessel (Japanese Patent Application Hei 1-106925 (U.S. Patent No. 5,153,977), Utility Model Application Hei 2-26837 and EP-European application 0,497,064.

In the above described method using a chip tube, because the chip tube projects out from the bottom of the outer vessel, it is necessary to attach a bottom cover in order to protect the chip tube. Accordingly, this is problematic because the height of the produced article becomes higher by the length of this protecting cover. Moreover, in the case of large capacity production, because it is necessary to seal and cut the chip tube for each article produced, operations become complicated. Moreover, as it Is essential that the process for this sealing technique be highly accurate, great skill is required in the operation. Additionally, the seal is occasionally insufficient, giving rise to the problem that the degree of vacuum deteriorates and the thermal insulating ability is lost over time. Further, in a sealing method using a chip tube, in the case where evacuating the space between the inner and outer vessels, when stimulating the desorption of gas absorbed by the metallic surface by heating the entire vessel, the outer surface of the vessel is exposed to the atmosphere, and a reaction occurs with the oxygen in the atmosphere causing violent oxidation. Because the esthetic appearance and anti-corrosive character of the oxidized surface are impaired, it is necessary to provide a process step to eject such sub-standard articles. Accordingly, costs are increased.

On the other hand, in a sealing method using brazing material, in order to achieve good wettability of the sealant with respect to the material of the outer vessel, it is necessary to remove any superficial oxidants in the material of the evacuation opening periphery. As a method therefor, there is available a method wherein heating is carried out at a temperature of 950° C or above and at a pressure of 1x10⁻³ torr or less on stainless steel, which is preferably used in, for example, metallic isotherm bottles. In this case, a special vacuum heating furnace of the type which can be used at high temperatures of 950° C and above is necessary. Accordingly, this too is problematic because equipment costs become very expensive.

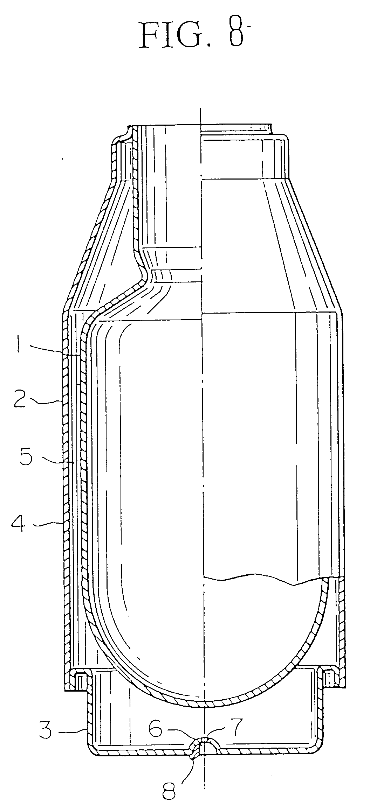

Figure 8 is provided in order to explain an example of the production method of a conventional metallic evacuated double-walled vessel. This method corresponds to an embodiment of US-A-5,153,977 and appears to be the closest to the invention. This figure shows the state of a metallic evacuated double-walled vessel prior to vacuum sealing. This prior to vacuum sealing vessel consists of an inner casing 1 which is cylindrical in shape and has a bottom, and an outer casing 4 which consists of a cylindrical outer casing body portion 2 and an outer casing bottom portion 3. The mouth portion of outer casing body portion 2 is air tightly joined to the mouth portion of inner casing 1. At the same time, outer casing bottom portion 3 is air tightly joined to the opening at one end of the vessel which is opposite the mouth portion of the outer casing body portion 2. Further, in the approximate center of the outer casing bottom portion 3, a concavity 6 which is indented inward toward inner casing 1 is formed. In the approximate center portion of this concavity 6, a small hole 7 (evacuation hole) or slit for evacuation is formed passing through a cavity 5 between the inner casing 1 and the outer casing 4.

In order to produce a metallic evacuated double-walled vessel by vacuum sealing this prior-to-sealing vessel, the vessel is inverted with the mouth portion of the prior-to-sealing vessel directed downward, a sealing hot charge 8, such as metallic brazing material, in a paste form is disposed in concavity 6, and the prior-to-sealing vessel is placed in a vacuum heating furnace. Melting and heating of the sealing hot charge 8 is carried out as the inside of the vacuum heating furnace is evacuate to a fixed degree of vacuum. The melted sealing hot charge 8 flows from the periphery therearound into the evacuation hole 7, plugging evacuation hole 7. Following this, sealing hot charge 8 is cooled and hardens, vacuum sealing evacuation hole 7. In this manner, a metallic evacuated double-walled vessel having an evacuated thermal insulating layer between the inner casing 1 and the outer casing 4 is produced.

However, in this conventional sealing method, a sealing hot charge 8 in a paste form is disposed about the periphery of concavity 6, the sealing hot charge 8 is melted during vacuum sealing, and flows along the incline of concavity 6 provided to evacuation hole 7, sealing evacuation hole 7. Accordingly, the manner of flow of the melted sealing hot charge 8 changes due to the quantity used, or as a result of the inclination or surface features of the outer casing bottom portion 3 and the concavity 6, the flow of hot charge 8 into evacuation hole 7 becomes unstable, resulting in insufficient sealing. In order to prevent such inconveniences, more sealing hot charge 8 than actually necessary must be used, causing production costs for the vessel to increase.

### BRIEF DESCRIPTION OF THE FIGURES

Figure 1 is a front cross sectional view of a double-walled vessel prior to sealing, showing a first embodiment of the present invention.

Figure 2 is a view of the bottom surface of the same prior-to-sealing vessel.

Figure 3 is a cross sectional view of an essential component of the same prior-to-sealing vessel.

Figure 4 is a cross sectional view of an essential component showing the state following vacuum sealing of the same vessel.

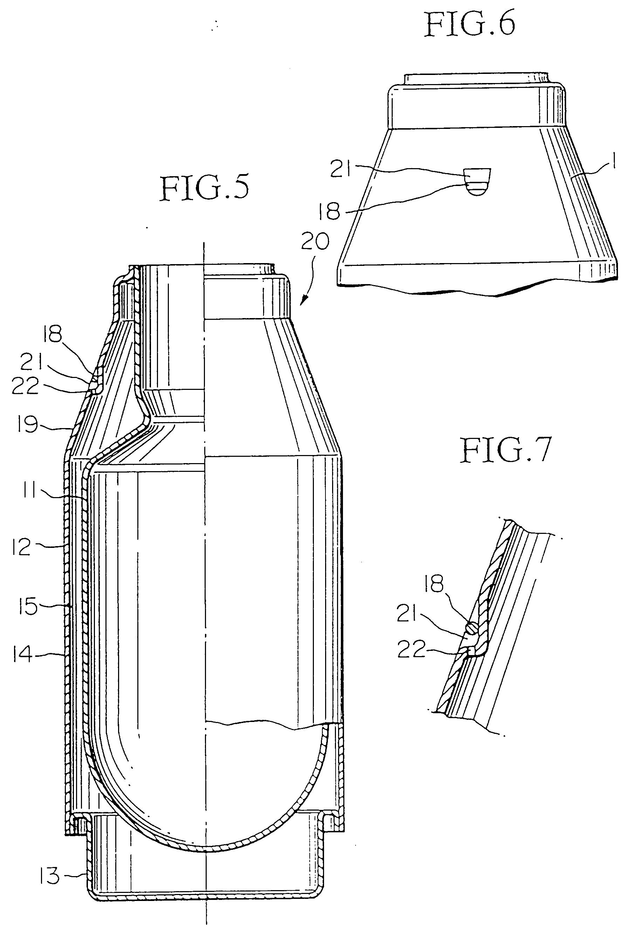

Figure 5 is a front cross sectional view of a vessel prior to sealing, showing a second embodiment of the present invention.

Figure 6 is a front view of an essential component of the same prior-to-sealing vessel.

Figure 7 is a cross sectional view of an essential component of the same prior-to-sealing vessel.

Figure 8 is a front cross sectional view of a prior-to-sealing vessel which is provided to explain the conventional art related to the present invention.

### SUMMARY OF THE PRESENT INVENTION

The present invention was conceived taking into consideration the aforementioned circumstances, and has as its objective the provision of a metallic evacuated double-walled vessel for which it is possible to carry out with surety the placement in an evacuation hole of a sealing hot charge for sealing the evacuation hole, and the sealing of the evacuation hole with the sealing hot charge, at a low cost, thus making possible a reduction in production costs.

The present invention concerns a production method for a metallic evacuated double-walled vessel wherein in a method for making a metallic evacuated double-walled vessel wherein the vessel consists of a metallic inner and outer vessel and an evacuated thermal insulating layer is formed in the cavity between the inner vessel and the outer vessel, the method comprises the steps of: forming a prior-to-sealing double-walled vessel by joining the mouth portions of the metallic inner and outer vessels to each other in a unitary fashion, forming a concavity in one of either the inner vessel and the outer vessel, and punching an evacuation hole for vacuum evacuation in the concavity; disposing at the time of vacuum heating, a sealing hot charge in a solid form; placing the prior-to-sealing vessel in a vacuum heating furnace, and performing vacuum evacuation of the cavity between the inner vessel and the out vessel via the evacuation hole until a fixed degree of vacuum is reached; vacuum sealing the vessel by heating and melting the sealing hot charge causing the melted sealing hot charge to drop down directly onto the evacuation hole and the vicinity therearound and fill the inside of the evacuation hole, and allowing the sealing hot charge to harden. According to the invention, the sealing charge is disposed at a position directly above the evacuation hole leaving a space therebetween before vacuum heating.

The present invention allows vacuum sealing to be carried out with greater surety than that provided by the conventional method wherein vacuum sealing is performed through the flowing of the melted sealing hot charge. Accordingly, by means of this first invention it is possible to lower the rate of defective vacuum sealings, and to improve yield.

Moreover, because vacuum sealing is carried out by allowing the melted sealing hot charge to drop directly down into the evacuation hole, such sealing defects as insufficient plugging of the evacuation hole by the sealing hot charge due to the surface tension forces of the sealing hot charge are eliminated, and the quantity of sealing hot charge required may be reduced, thus permitting a reduction in production costs.

Further, when compared to the convention method using a chip tube, it is possible to produce a more compact article as there is no remnant of the chip tube to protrude out. Moreover, with regard to the sealing process, because the treatment in the vacuum heating furnace may be carried out with stability for a large number of articles simultaneously without the introduction of human labor, large capacity production is easily achieved and it is possible to reduce production costs. Moreover, with regard to the process of vacuum evacuation of the space between the inner and outer vessels, because the entire vessel is heated under a vacuum, there is no notable oxidation of the outer surface of the vessel, thus a final removal step may be omitted. Costs can therefore be reduced.

### DETAILED DESCRIPTION OF THE PREFERRED EMBODIMENTS OF THE PRESENT INVENTION

### Embodiment 1

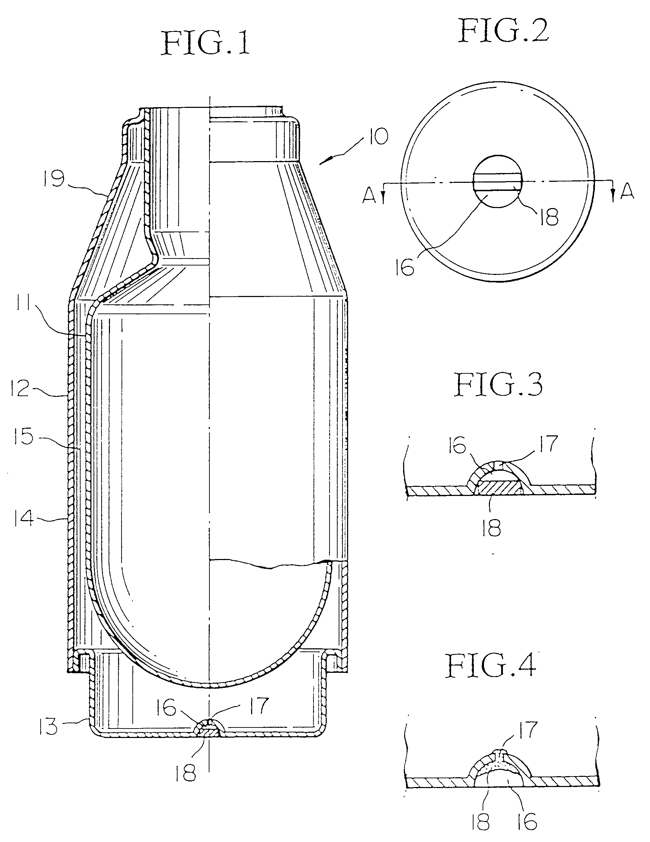

In the production method for a metallic evacuated double-walled vessel according to this embodiment, prior to vacuum sealing, the vessel (hereinafter, referred to as prior-to-sealing vessel 10) shown in Figures 1 through 3 is first prepared.

This prior-to-sealing vessel 10 consists of a metallic inner casing 11 which is cylindrical in shape and has a bottom, and a metallic outer casing 14 which similarly is cylindrical in shape and has a bottom, the inner casing 11 and outer casing 14 being joined at the mouth portions thereof. Outer casing 14 is formed from an outer casing body portion 12 which has a shoulder portion 19 the diameter of which as it approaches the mouth portion gradually reduces in the vicinity of the outer end portion of the mouth portion, and an outer casing bottom portion 13 which is air tightly joined to the opening of outer casing body portion 12 which is opposite the mouth portion thereof. Stainless steel is, in particular, preferably used as the metallic material which composes inner casing 11 and outer casing 14.

A semi-spherical concavity 16 is indented inward toward inner casing 11 at the approximate center portion of outer casing bottom portion 13. The diameter Do of concavity 16 is preferably 3 to 15 mm. An evacuation hole 17 consisting of a small hole having a diameter A of 0.1 to 2 mm is formed in the approximate center of concavity 16. Furthermore, a cylindrical solid sealing hot charge 18 is disposed in concavity 16. The diameter d of this solid sealing hot charge 18 is preferably 0.3 to 3 mm, and the length L thereof is within the limits such that A < L < Do.

In the state for vacuum heating prior-to-sealing vessel 10, namely in the state where the opening of the vessel is directed downward, this solid sealing hot charge 18 is attached in concavity 16 so as to be positioned vertically above evacuation hole 17, with an interval of spacing therebetween.

Next, a metallic double-walled vessel is produced by vacuum sealing prior-to-sealing vessel 10.

The above described prior-to-sealing vessel 10 is contained within a vacuum heating furnace in a state such that the mouth portion is directed downward. The vacuum heating process is then carried out. Namely, following vacuum evacuation of cavity 15 to a fixed degree of vacuum via evacuation hole 17 at a temperature below the melting temperature of sealing hot charge 18, the temperature is raised above the melting temperature of sealing hot charge 18, melting sealing hot charge 18 and causing it to drop down onto evacuation hole 17 which is positioned vertically thereunder, and onto the vicinity thereabout.

Sealing hot charge 18 which has dropped down onto evacuation hole 17 and the vicinity thereof collects on evacuation hole 17, and enters within evacuation hole 17 as a result of capillary phenomenon. Following this, sealing hot charge 18 cools and hardens, sealing evacuation hole 17 with surety. Figure 4 shows the state where evacuation hole 17 has been sealed in this manner by sealing hot charge 18.

If hole diameter A of evacuation hole 17 is less than 0.1 mm, then it is possible that the evacuation of cavity 15 will not be sufficient. Likewise, if hole diameter A is larger than 2.0 mm, due to the surface tension of the melted sealing hot charge 18, it is possible that the hole will not be plugged sufficiently by sealing hot charge 18. Further, provided that sealing hot charge 18 is in a solid form, a metallic brazing material or a low temperature melting glass may also be utilized.

As described above, a metallic evacuated double-walled vessel which consists of metallic inner casing 11 and an outer casing 14 and has an evacuated thermal insulating layer formed between inner casing 11 and outer casing 14, is produced.

In this embodiment, in the state for vacuum heating prior-to-sealing vessel 10, in other words in the state where the opening of the vessel is directed downward, a cylindrical, solid sealing hot charge 18 is attached in concavity 16 so as to be positioned vertically above evacuation hole 17, and the prior-to-sealing vessel 10 is contained then within a vacuum heating furnace. First, cavity 15 is vacuum evacuated to a fixed degree of vacuum via evacuation hole 17 at a temperature below the melting temperature of sealing hot charge 18. Following this, the temperature is raised above the melting point of sealing hot charge 18, melting sealing hot charge 18 and causing it to drop down under its own weight onto evacuation hole 17 positioned vertically thereunder and onto the vicinity thereabout. By carrying out vacuum sealing in this manner, it is possible to carry out vacuum sealing with greater surety than that provided by conventional methods of vacuum sealing which rely on the flow of a paste form melted sealing hot charge. Moreover, it is also possible to improve product yield by reducing the rate at which defective vacuum sealings arise. Further, because the melted sealing hot charge 18 drops directly down onto evacuation hole 17, vacuum sealing it, such sealing defects as sealing hot charge 18 not plugging evacuation hole 17 sufficiently due to the surface tension of the melted sealing hot charge 18 are eliminated, and the amount of sealing hot charge 18 used can be reduced. Thus, product costs can be lowered.

Additionally, the position for the provision of concavity 16 is not limited as aforementioned to the outer casing bottom portion 13, but may be provided to the inner casing 11 or to the shoulder portion 19 of outer casing body portion 12, as is the case in a later embodiment. Further, in addition to being a curved concavity such as in the preceding embodiment, the bottom portion of concavity 16 may also be level or inclined. Moreover, the shape of evacuation hole 17 which is punched in concavity 16 may be a slit shaped long hole, or may comprise several small aligned holes. The position at which evacuation hole 17 is punched in concavity 16 is not limited to the approximate center of concavity 16, but may be elsewhere about the vicinity thereof. Furthermore, solid sealing hot charge 18 may be other than a cylindrical shape, provided that it is a solid material the length of which is longer than the diameter of evacuation hole 17, and that the shape of which has dimensions which do not interfere with vacuum evacuation when it sealing hot charge 18 disposed directly above evacuation hole 17. Moreover, the cubic volume of sealing hot charge 18 is not limited to a cubic volume as calculated from the above described dimensions. Rather, provided that the cubic volume is with limits which proscribe a minimum value for the cubic volume for the sealing hot charge 18 such that the sealing hot charge 18 has at least a thickness of 0.1 mm and can cover twice the diameter of the minimum cubic volume of evacuation hole 17, and a maximum value for the cubic volume of sealing hot charge 18 such that it does not exceed the inner cubic volume of the concavity so that external impacts are not locally concentrated.

### Embodiment 2

The prior-to-sealing vessel 20 used in this embodiment differs from the prior-to-sealing vessel 10 used previous embodiment in that a pocket shaped concavity 21 is formed to shoulder portion 19 of the outer casing body portion 12, small evacuation hole 22 is punched in concavity 21, and a cylindrical sealing hot charge 18 is attached vertically above the evacuation hole 22.

Because, with prior-to-sealing vessel 20 in an upright state, solid sealing hot charge 18 is positioned vertically above evacuation hole 22 with spacing therebetween, in order to carry out vacuum sealing of prior-to-sealing vessel 20, prior-to-sealing vessel 20 is placed upright, namely placed with the mouth portion of the vessel directed upward, and contained within a vacuum heating furnace. Vacuum heating is then carried out. In this vacuum heating treatment, cavity 15 is first vacuum evacuated to a fixed degree of vacuum via evacuation hole 22 at a temperature below the melting temperature of sealing hot charge 18. Then, the temperature is raised above the melting temperature of sealing hot charge 18, melting sealing hot charge 18 and causing it to drop down onto evacuation hole 22 which is positioned directly therebelow, and onto the vicinity around evacuation hole 22. Sealing hot charge 18 which has dropped down onto evacuation hole 22 and the vicinity therearound collects on evacuation hole 22 and enters into evacuation hole 22 as a result of capillary phenomenon. Following this, sealing hot charge 18 cools and hardens, sealing evacuation hole 22 with surety.

In the production method according to this embodiment, in addition to obtaining the same effects as those obtained in the previous embodiment, because prior-to-sealing vessel 20 is placed in a vacuum heating furnace with the mouth portion thereof directed upward during vacuum heating, a support device for supporting the prior-to-sealing vessel in the vacuum heating furnace is unnecessary. Thus, the operations of inserting and removing the vessel for vacuum heating are facilitated.

## Claims

1. A method for making a metallic evacuated double-walled vessel (10) wherein said vessel consists of metallic inner (11) and outer (12) vessels and the space (15) between said inner vessel and said outer vessel forms an evacuated thermal insulating layer, the method comprising the steps of :
(a) forming a prior-to-sealing double-walled vessel by joining said metallic inner vessel and said metallic outer vessel unitarily together at the respective mouth portions thereof, forming a concavity (16, 21) in one of either said inner vessel (11) and said outer (12) vessel, and punching inside said concavity an evacuation hole (17, 22) through which to carry out vacuum evacuation ;
(b) disposing prior to vacuum heating a solid shaped sealing material (18) ;
(c) placing said prior-to-sealing double-walled vessel inside a vacuum heating furnace, and vacuum evacuating via said evacuation hole (17, 22) said cavity between said inner vessel and said outer vessel to a specified degree of evacuation ; and
(d) carrying out vacuum sealing by heating and melting said sealing material, causing said melted sealing material to drop down onto and fill said evacuation hole and the vicinity thereabout, and hardening said sealing material ; characterised in that said sealing material (18) is disposed, prior to vacuum heating, at a position directly above said evacuation hole of said prior-to-sealing double-walled vessel with an interval of space therebetween.

2. A method for making a metallic evacuated double-walled vessel according to claim 1, wherein a concavity (16) and an evacuation hole (17) are formed in the bottom portion (13) of the outer vessel (12) of a double-walled vessel, characterised in that a sealing hot charge (18) comprising one of either a solid brazing material and a low temperature melting glass is disposed within said concavity (16) at a position so as to be directly above said evacuation hole when said double-walled vessel is inverted with an interval of spacing being maintained between said sealing hot charge and said evacuation hole, said souble-walled vessel is inverted so that the mouth portion thereof is directed downward and is placed in a vacuum heating furnace, and vacuum evacuation and vacuum sealing are carried out.

3. A method for making a metallic evacuated double-walled vessel according to claim 1, characterised in that a concavity (21) and an evacuation hole (22) are formed in the shoulder portion (19) of the outer vessel of a double-walled vessel, a sealing hot charge (18) comprising one of either a solid brazing material and a low temperature melting glass is disposed within said concavity at a position so as to be directly above said evacuation hole with an interval of spacing being maintained between said sealing hot charge and said evacuation hole, said double-walled vessel is placed upright so that the mouth portion thereof is directed upward in a vacuum heating furnace, and vacuum evacuation and vacuum sealing are carried out.

## Patentansprüche

1. Ein Verfahren zur Herstellung eines metallischen, evakuierten, doppelwandigen Gefäßes (10), wobei das genannte Gefäß aus einem inneren (11) und einem äußeren (12), metallischem Gefäß besteht und der Raum (15) zwischen dem genannten inneren Gefäß und dem genannten äußeren Gefäß eine evakuierte, wärmeisolierende Schicht bildet, wobei das Verfahren die Schritte umfaßt:
(a) Bilden eines doppelwandigen Gefäßes vor der Abdichtung, indem das genannte metallische, innere Gefäß und das genannte metallische, äußere Gefäß einheitlich an deren entsprechenden Öffnungsbereichen miteinander verbunden werden, bilden eine Einwölbung (16, 21) in dem genannten inneren Gefäß (11) oder dem genannten äußeren Gefäß (12), und stanzen eines Evakuierungsloches (17, 22) innerhalb der genannten Einwölbung durch das hindurch die Vakuumevakuierung ausgeführt wird;
(b) Anordnen eines festgeformten Dichtungsmaterials (18) vor der Vakuumerwärmung;
(c) Anordnen des genannten doppelwandigen Gefäßes vor der Abdichtung innerhalb eines Vakuumwärmeofens und Vakuumevakuieren mittels des genannten Vakuumlochs (17, 22) des genannten Hohlraums zwischen dem genannten inneren Gefäß und dem genannten äußeren Gefäß bis zu einem festgelegten Evakuierungsgrad; und
(d) Ausführen einer Vakuumabdichtung durch Erwärmen und Schmelzen des genannten Dichtungsmaterials, wobei das genannte, geschmolzene Dichtungsmaterial veranlaßt wird, nach unten auf das genannte Evakuierungsloch zu tropfen und dieses und die Nachbarschaft um es herum zu füllen, und verfestigen des genannten Dichtungsmaterials; **dadurch gekennzeichnet,** daß das genannte Dichtungsmaterial (18) vor der Vakuumerwärmung an einem Ort unmittelbar oberhalb des genannten Evakuierungsloches des doppelwandigen Gefäßes vor der Abdichtung mit einem Zwischenraum dazwischen angeordnet wird.

2. Ein Verfahren zur Herstellung eines metallischen, evakuierten, doppelwandigen Gefäßes gemäß Anspruch 1, wobei eine Einwölbung (16) und ein Evakuierungsloch (17) in dem Bodenbereich (13) des äußeren Gefäßes (12) eines doppelwandigen Gefäßes gebildet werden, **dadurch gekennzeichnet,** daß eine heiße Abdichtungsladung (18), die ein festes Lötmaterial oder ein bei niedriger Temperatur schmelzenden Glas umfaßt, innerhalb der genannten Einwölbung (16) an einem Ort angeordnet wird, so daß es unmittelbar oberhalb des genannten Evakuierungslochs ist, wenn das genannte doppelwandige Gefäß umgekehrt wird, wobei ein Zwischenraum zwischen der genannten heißen Abdichtungsladung und dem genannten Evakuierungsloch beibehalten wird, wobei das genannte doppelwandige Gefäß umgekehrt wird, so daß dessen Öffnungsbereich nach unten gerichtet ist, und in einem Vakuumheizofen angeordnet wird und eine Vakuumevakuietung und Vakuumabdichtung ausgeführt werden.

3. Ein Verfahren zur Herstellung eines metallischen, evakuierten, doppelwandigen Gefäßes gemäß Anspruch 1, **dadurch gekennzeichnet,** daß eine Einwölbung (21) und ein Evakuierungsloch (22) in dem Schulterabschnitt (19) des äußeren Gefäßes eines doppelwandigen Gefäßes gebildet werden, eine Heißdichtungsladung (18), die ein festes Lötmaterial oder ein bei niedriger Temperatur schmelzendes Glas umfaßt, innerhalb der genannten Einwölbung an einem Ort angeordnet wird, so daß es unmittelbar oberhalb des genannten Evakuierungslochs mit einem Zwischenraum angeordnet wird, der zwischen der genannten Heißdichtungsladung und dem genannten Evakuierungsloch beibehalten wird, das genannte doppelwandige Gefäß aufrecht angeordnet wird, so daß dessen Öffnungsabschnitt in einem Vakuumheizofen nach oben gerichtet ist, und eine Vakuumevakuierung und Vakuumabdichtung ausgeführt werden.

## Revendications

1. Procédé de fabrication d'un récipient métallique à double paroi évacuée (10), dans lequel ledit récipient se compose d'un récipient métallique intérieur (11) et d'un récipient extérieur (12), et l'espace (15) entre ledit récipient intérieur et ledit récipient extérieur forme une couche isolante thermique évacuée, le procédé comprenant les étapes consistant à :
(a) former un récipient à double paroi d'avant scellement en réunissant ledit récipient métallique intérieur et ledit récipient métallique extérieur, ensemble de manière unitaire au niveau de leurs embouchures respectives, pour former une partie concave (16, 21) dans l'un ou l'autre desdits récipient intérieur (11) et récipient extérieur (12), et percer à l'intérieur de ladite partie concave un trou d'évacuation (17, 22) à travers lequel s'effectue une évacuation de vide ;
(b) placer, avant un traitement thermique sous vide, un matériau d'étanchéité sous forme solide (18) ;
(c) placer ledit récipient à double paroi d'avant scellement à l'intérieur d'un four pour traitement thermique sous vide, et évacuer, par l'intermédiaire dudit trou d'évacuation (17, 22), de ladite cavité ménagée entre ledit récipient intérieur et ledit récipient extérieur pour produire du vide jusqu'à un degré spécifié d'évacuation ; et
(d) réaliser un scellement sous vide en chauffant et en faisant fondre ledit matériau d'étanchéité, pour contraindre ledit matériau d'étanchéité fondu à tomber sur ledit trou d'évacuation, et la partie qui l'entoure, et à le remplir, et durcir ledit matériau d'étanchéité ; caractérisé en ce que ledit matériau d'étanchéité (18) est placé, avant le traitement thermique sous vide, à une position située directement au-dessus dudit trou d'évacuation dudit récipient à double paroi d'avant scellement, en ménageant un intervalle d'espacement entre eux.

2. Procédé de fabrication d'un récipient métallique à double paroi évacuée selon la revendication 1, dans lequel une partie concave (16) et un trou d'évacuation (17) sont formés dans la partie inférieure (13) du récipient extérieur (12) d'un récipient à double paroi, caractérisé en ce qu'une charge chaude d'étanchéité (18), qui comprend soit un matériau de brasage solide, soit un verre fondant à basse température, est placée à l'intérieur de ladite partie concave (16) en une position telle qu'elle est directement au-dessus dudit trou d'évacuation quand ledit récipient à double paroi est inversé, un intervalle d'espacement étant maintenu entre ladite charge chaude d'étanchéité et ledit trou d'évacuation, ledit récipient à double paroi est inversé de telle sorte que son embouchure soit dirigée vers le bas et soit placée dans un four pour traitement thermique sous vide, et une évacuation au vide et un scellement sous vide sont réalisés.

3. Procédé de fabrication d'un récipient métallique à double paroi évacuée selon la revendication 1, caractérisé en ce qu'une partie concave (21) et un trou d'évacuation (22) sont formés dans la partie d'épaulement (19) du récipient extérieur d'un récipient à double paroi, une charge chaude d'étanchéité (18), qui comprend soit un matériau de brasage solide, soit un verre fondant à basse température, est placée à l'intérieur de ladite partie concave en une position telle qu'elle est directement au-dessus dudit trou d'évacuation, un intervalle d'espacement étant maintenu entre ladite charge chaude d'étanchéité et ledit trou d'évacuation, ledit récipient à double paroi est placé à la verticale de telle sorte que son embouchure soit dirigée vers le haut dans un four pour traitement thermique sous vide, et une évacuation au vide et un scellement sous vide sont réalises.
